# EUROPEAN PATENT SPECIFICATION

(11) **EP 0 594 907 B1**
(45) Date of publication and mention of the grant of the patent: **26.03.1997**
(21) Application number: 92309853.7
(22) Date of filing: 28.10.1992
(51) Int. Cl.: H02P 7/638

(54) **Speed limiting circuit for universal type series or compound electric motor**
Schaltungsanordnung zur Begrenzung der Geschwindigkeit eines Reihenschluss- oder Kompound-Elektromotors universeller Art
Circuit pour limiter la vitesse d'un moteur électrique série ou compound de type universel

(43) Date of publication of application: 04.05.1994
(73) Proprietor: Yang, Tai-Her, Taipei (TW)
(72) Inventor: Yang, Tai-Her, Taipei (TW)
(74) Representative: Arthur, Bryan Edward

(56) References cited:
- EP-A- 0 481 773
- DE-A- 2 310 835
- US-A- 5 015 928

## Description

### BACKGROUND OF THE INVENTION

### 1. Field of the Invention

The present invention relates to universal series-excitation and compound excitation electric motors and, more particularly, to a speed limiting circuit for controlling the speed of such motors under load and no load condition.

### 2. Description of the Background

Conventional universal series or compound electric motors are widely utilized in driving various kinds of industrial machinery, electric tools, and household appliances. However, these types of motors have an undesirable characteristic in that they are very load sensitive.

Series motors develop a high torque at starting and run at a speed which is dependent on load. As the load on the motor is decreased, the speed of the motor will increase. The load dependency of series and compound motors is due to the method in which the field and armature windings are connected. In the series motor, the field and armature windings are connected in series so that the strength of the field is dependent on the motor load and varies with armature current. The load dependency is a desirable characteristic in many applications, including industrial machinery which must initially accelerate at high torque to a higher continuous speed and lower operating torque. However, under no load conditions, the high rotational speed causes noise and wear on the gear and bearings of the transmission device. Under high load conditions, the rotational speed slows, the field winding becomes saturated, and efficiency is decreased.

The speed/load dependency is reduced in conventional shunt motors where the field winding is connected in parallel with the armature. This way, the field winding is energized by a constant voltage so that the magnetic field remains constant. Consequently, the speed remains relatively constant under varying load conditions. However, shunt motors lack the inherent high starting torque of series-excitation motors.

A compound motor is a hybrid of the above-described series and shunt motors. In addition to the shunt field winding in parallel with the armature, the compound motor has a series winding which reinforces the field. Compound motors have a high starting torque similar to series motors and exhibit some degree of speed constancy as in the shunt motor. Nevertheless, the variance in speed of compound motors can have detrimental effects similar to those of series motors, such as wear on the transmission device and high speed noise.

Hence, there exists a clear commercial need for a device capable of limiting the maximum and/or minimum speed of series motors, and of maintaining tighter control of the maximum and/or minimum speed of compound motors.

US Patent No. 5015928 discloses a shunt element disposed across an armature of a series connected motor. When the motor speed rises above a critical value, the back EMF of the armature is sensed and the shunt element is switched into the circuit thereby increasing the flux of the motor field, and thereby limiting the maximum speed of the motor armature. The shunt element includes, for example, a TRIAC.

EP0481773 discloses a series excitation motor speed control circuit which can choose the operation of alternating current double speed motors between high speed operation and limited speed operation. The circuit is characterised by the use of a switch to control the positive bias diode assembly which is connected in parallel to two ends of a series excitation armature.

### SUMMARY OF THE INVENTION

Accordingly, it is an object of the present invention to provide a circuit for limiting the speed of a universal type series or compound electric motor under load and no load conditions.

It is another object of this invention to provide a circuit which allows a selection between high or low speed limiting functions, or simultaneous high and low speed limiting functions.

It is a further object of the present invention to provide for the adjustment of the maximum and minimum motor speeds by selection of the limiting voltage values.

It is still another object of the invention to provide a plurality of circuit embodiments for accommodating various types of power supplies.

According to one aspect of the present invention, a speed limiting circuit for series excitation and compound excitation motors of the type including a field winding (F1) and an armature winding (A1), comprises:
a low speed limiter shunt device (ZF) which is connected in parallel across the field winding (F1) of the motor, the shunt device (ZF) being triggered to divert current around the field winding (F1) to the armature (A1) winding of the motor when a load applied to said motor causes the voltage across the field winding (F1) to exceed a first predetermined value, whereby the minimum speed of the motor is limited by the reduction of current passing through the field winding (F1).

According to another aspect of the present invention, an adjustable speed limiting circuit for a series excitation motor, comprises:
a plurality of series-connected zener diodes (ZM) coupled in parallel across a series-connected field winding and armature (A) of said motor, said diodes (ZM) having a first plurality of tap leads (TA1 - TAn) coupled between respective diodes;
a second plurality of tap leads (TF1 - TFn) connected at successive intervals along said field winding of said motor; and
a switch device (SWo) for selectively connecting one of the first plurality of tap leads with a corresponding one of the second plurality of tap leads, said switch device (SWo) being triggered to shunt current around said field winding to an armature winding (A) of said motor when a voltage across said field winding exceeds a predetermined first value and said switch device (SWo) being triggered to shunt current around said armature winding (A) of said motor when a voltage across said armature winding (A) exceeds a predetermined second value;
whereby when a load applied to said motor causes said field winding voltage to exceed said predetermined first value, said switch device (SWo) reduces field current to limit a minimum speed of said motor, and when a substantially no-load condition on said motor causes said armature winding voltage to exceed said predetermined second value, said switch device (SWo) maintains field magnetization to limit a maximum speed of said motor.

The impedance of the limiter shunt device is also selectable to meet power supply regiments. A series inductive, capacitive, resistive, or mixed type impedance element may be selected. In addition, a series auxiliary field winding with identical polarity to the motor field winding may be selected in order to increase the field when the limiter shunt device is triggered.

### BRIEF DESCRIPTION OF THE DRAWINGS

Other objects, features, and advantages of the present invention will become more apparent from the following description of the invention with reference to the enclosed drawings, in which:
FIG. 1 is a block diagram showing a high/low limiting speed circuit according to the present invention incorporated in a universal type series excitation motor;
FIG. 2 is a detailed schematic of one embodiment of a limiter shunt device circuit employing a silicon controlled rectifier (thyristor) which is suited for use as device ZF and/or ZA as shown in the circuit of FIG. 1 when powered by an AC or pulsed-DC input;
FIG. 3 is a detailed schematic of another embodiment of a limiter shunt device circuit employing silicon controlled rectifiers (thyristors), this embodiment likewise being suited for use as device ZF and/or ZA as shown in the circuit of FIG. 1 when powered by an AC or pulsed-DC input.
FIG. 4 is an embodiment of a low power limiter shunt device circuit employing Zener diodes, this embodiment being suited for use as device ZF and/or ZA as shown in the circuit of FIG. 1 when powered by an AC input;
FIG. 5 is an alternative embodiment of a limiter shunt device circuit employing Zener diodes with a series-capacitance, this embodiment likewise being suited for use as device ZF and/or ZA as shown in the circuit of FIG. 1 when powered by an AC input;
FIG. 6 is an alternative embodiment of a limiter shunt device circuit employing Zener diodes with a series-inductance, this embodiment likewise being suited for use as device ZF and/or ZA as shown in the circuit of FIG. 1 when powered by an AC input;
FIG. 7 is a graph showing the operation of a conventional series excitation motor in terms of RPM (speed) v. TORQUE (LOAD);
FIG. 8 is a graph of RPM (speed) v. TORQUE (LOAD) showing the operational characteristics of a series excitation motor having limiter shunt device circuits ZF and ZA according to the present invention mounted in parallel with both the field and armature windings as shown in FIG. 1;
FIG. 9 is a graph of RPM (speed) v. TORQUE (LOAD) showing the operational characteristics of a series excitation motor having a limiter shunt device circuit ZF according to the present invention mounted in parallel with the field winding only;
FIG. 10 is a graph of RPM (speed) v. TORQUE (LOAD) showing the operational characteristics of a series excitation motor having a limiter shunt device circuit ZA according to the present invention mounted in parallel with the armature winding only; and
FIG. 11 is a diagram showing a line of shunt devices with block-type adjustable limiting voltage value.

### DETAILED DESCRIPTION OF THE PREFERRED EMBODIMENTS

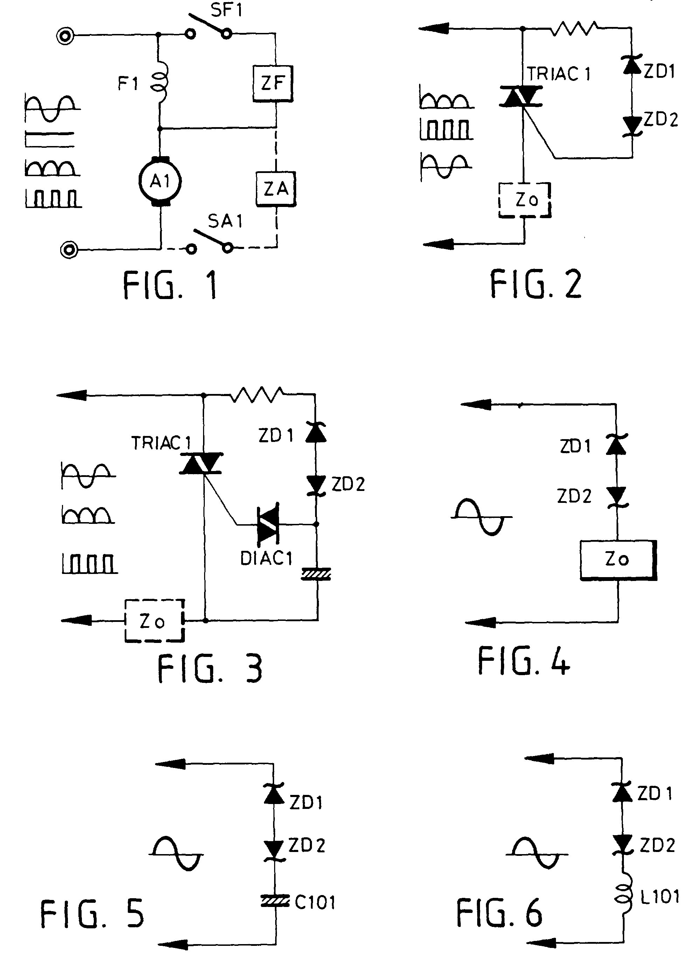

FIG. 1 is a schematic showing a high/low speed limiting circuit for universal series electric motors, wherein the motor may be driven by an AC (sine or sine²), DC, or pulsed-DC power supply.

As shown, the field coil F1 and the armature A1 are wired in series in such a motor. The power supply is connected in parallel across the series-connected field coil F1 and armature coil A1.

A limiter shunt device ZF may be selectively connected across the field coil F1 via a switch SF1. SF1 is a conventional switch or relay which provides a convenient way of removing limiter shunt device ZF from the circuit. When limiter shunt device ZF is connected via switch SF1, the limiter shunt device ZF operates in accordance with the voltage applied to it. Specifically, when the voltage of the field coil F1 increases above a predetermined limiting value due to heavy load conditions, the limiter shunt device ZF acts to shunt current through circuit ZF to the armature, A1. This action creates a minimum speed below which the slowing motor speed cannot fall.

Likewise, a limiter shunt device ZA may be connected across the armature coil A1 via switch SA1. This way, when the voltage of the armature coil A1 increases above a predetermined limiting value due to no load conditions, the limiter shunt device ZA is switched into the circuit by switch SA1 and shunt current flows through circuit ZA. This action creates a maximum speed above which the accelerating motor speed cannot pass.

Since switch SF1 allows selective application/removal of the low speed limiting function of the field coil limiter shunt device ZF, and switch SA1 allows selective application/removal of the high speed limiting function of the armature limiter shunt device ZA, independent application/removal of the low, high, or both low and high speed limiting functions may be carried out.

FIG. 2 is a circuit schematic of the limiter shunt device circuit employing AC silicon controlled rectifier TRIAC1 (thyristor) having a gate connected to a bi-lateral zener diodes ZD1 and ZD2, which diodes are in turn connected to a resistance. The circuit of FIG. 2 is suited for use as ZF or ZA of FIG. 1 when an AC (sine or sine²) or pulsed-DC power supply input is applied.

In operation, when the field coil F1 voltage or armature coil A1 voltage is less than the predetermined zener voltage values VZD1 or VZD2 of zener diodes ZDl and ZD2, respectively, then TRIAC1 remains in a non-conducting blocking state and there is no current shunting action. However, once the field coil F1 voltage or armature coil A1 voltage rises above voltage limits VZD1 and VZD2, TRIAC1 is triggered and current is shunted. This maintains the speed of the motor.

A current limiter Zo may be provided in series with the TRIAC1. The current limiter Zo may be a resistive, capacitive, inductive, or mixed type impedance element that will limit the rate of current shunting.

In addition, an auxiliary field winding (not shown) having identical polarity to the motor field winding F1 may be provided in place of current limiter Zo. The auxiliary field winding will increase the magnetic field when current shunting is occurring.

FIG. 3 is a circuit schematic of an alternative limiter shunt device circuit employing AC silicon controlled rectifiers TRIAC1 and DIAC1 (thyristors). This shunt device is suited for use as device ZF and/or ZA as shown in Figure 1. The gate of TRIAC1 is connected as shown through DIAC1 to bi-lateral zener diodes ZD1 and ZD2, which diodes are in turn connected to a resistance. Like the circuit in FIG. 2, the limiter shunt device circuit of FIG. 3 will accommodate either AC (sine or sin) or pulsed-DC power supply inputs. In operation, TRIAC1 will trigger once the Zener voltage thresholds, VZD1 and VZD2, are surpassed, and current will be shunted.

FIG. 4 is a circuit schematic of an alternative low-power embodiment of a limiter shunt device circuit for use as limiter device ZF and/or ZA employing bilateral Zener diodes ZD1 and ZD2, and series-connected shunt resistance Zo, for accommodating only AC power supply inputs.

FIG. 5 is a circuit schematic of an alternative low power limiter shunt device for use as a limiter device ZF and/or ZA which employs bilateral Zener diodes ZD1 and ZD2, and series-connected shunt capacitance C101, for accommodating only AC power supply inputs.

FIG. 6 is a circuit schematic of another alternative low power limiter shunt device which employs bilateral Zener diodes ZD1 and ZD2, and series-connected shunt inductance L101, for accommodating only AC power supply inputs. Again, this limiter is for use as devices ZF and/or ZA.

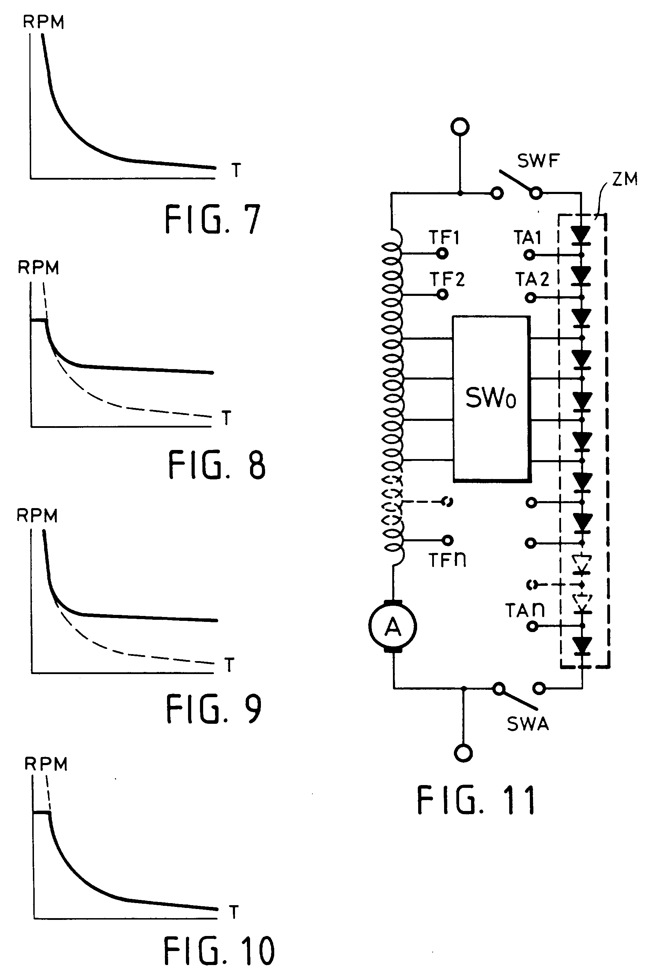

FIGS. 7 - 10 teach the effect of the limiter shunt devices embodied in FIGS. 2 - 6, mounted in parallel with the field coil F1 and/or armature coil A1 as in FIG. 1.

FIG. 7 is a RPM v. TORQUE (LOAD) graph showing the operational characteristics of a conventional series electric motor. Note that the speed rises indefinitely as the load is decreased and the speed decreases indefinitely as the load is increased.

FIG. 8 is a RPM v. TORQUE graph showing the operational characteristics of a series electric motor having limiter shunt devices ZF and ZA mounted in parallel with the field coil F1 and armature coil A1, respectively, as shown in FIG. 1. The operational characteristics of a conventional series electric motor are superposed (see dotted line) for contrast. The armature appears to operate like a shunt electric motor. Note that the motor's top speed is limited under light load conditions and the motor's slowest speed is limited under heavy load conditions thereby protecting the transmission device and reducing noise level under light load conditions and increasing efficiency under heavy load conditions. The high and low limiting speed values may be preset by adjusting the Zener diode threshold voltages of the limiter shunt device circuits.

FIG. 9 is an RPM v. TORQUE graph showing the operational characteristics of a series excitation motor with a limiter shunt device ZF mounted in parallel with the field coil F1 for effecting only the low-speed limiting function. The operational characteristics of a conventional series electric motor are superposed (see dotted line) for contrast. Note that the motor's top speed is not limited. Hence, current is shunted to the armature coil A1 through the limiter shunt device ZF only under heavy load and starting conditions when the speed of the motor decreases below the threshold speed as determined by the Zener diode ZD1 and ZD2 threshold voltages VZD1 and VZD2.

FIG. 10 is an RPM v. TORQUE graph showing the operational characteristics of a series excitation motor with a limiter shunt device ZA mounted in parallel with the armature coil A1 for effecting only the high-speed limiting function. Note that the motor's lowest speed is not limited. Hence, when the load gets lighter and the armature's negative electromotive force (EMF) rises, some of the field coil F1 current will flow through the limiter shunt device ZA, thereby maintaining field magnetization to limit the top speed. The threshold at which current is shunted around the armature coil A1 through the limiter shunt device ZA is likewise determined by the Zener diode ZD1 and ZD2 threshold voltages VZD1 and VZD2.

FIG. 11 is a circuit diagram of a variable (adjustable) type limiter shunt device circuit which enables easy modification of the preset voltage threshold value. This adjustable limiter shunt device comprises a field winding TF with a plurality of taps TF1-TFn. In addition, a discrete or integrated circuit series-chain of diodes ZM is tapped at each diode junction by a plurality of series taps TA1-TAn. An operating switch SWF connects one end of IC ZM to the field winding TF and to one terminal of the power supply, and an operating switch SWA connects the other end of IC ZM to the armature winding A and to the other terminal of the power supply. An operating switch SWO is connected between corresponding pairs of taps TF1-TFn and TA1-TAn for selectively connecting one of taps TF1-TFn with one of taps TA1-TAn to obtain the desired high and low speed limiting values. As before, switch SWF will trigger the low-speed limiting operation of the limiter shunt device by placing a selected number of diodes of IC ZM in parallel with the field winding TF. Likewise, switch SWA will trigger the high-speed limiting operation of the limiter shunt device by placing a selected number of diodes of IC ZM in parallel with the armature winding A.

Having now fully set forth the preferred embodiments and certain modifications of the concept underlying the present invention, various other embodiments as well as certain variations and modifications of the embodiment herein shown and described will obviously occur to those skilled in the art upon becoming familiar with said underlying concept. It is to be understood, therefore, that within the scope of the appended claims, the invention may be practiced otherwise than as specifically set forth herein.

## Claims

1. A speed limiting circuit for series excitation and compound excitation motors of the type including a field winding (F1) and an armature winding (A1), the circuit comprising:
a low speed limiter shunt device (ZF) which is connected in parallel across the field winding (F1) of the motor, the shunt device (ZF) being triggered to divert current around the field winding (F1) to the armature winding (A1) of the motor when a load applied to said motor causes the voltage across the field winding (F1) to exceed a first predetermined value, whereby the minimum speed of the motor is limited by the reduction of current passing through the field winding (F1).

2. A circuit according to claim 1, further comprising:
a high speed limiter shunt device (ZA) which is connected in parallel across the armature (A1) of the motor, the high speed limiter shunt device (ZA) being triggered to divert current around the armature winding (A1) when a substantially no-load condition on said motor causes the voltage across the armature winding (A1) to exceed a second predetermined value, whereby the maximum speed of the motor is limited by the reduction of current passing through the armature winding (A1).

3. A circuit according to claim 1 or 2 further comprising a first switch (SF1) connected in series with the low speed limiter shunt device (ZF) for selectively switching the low speed limiter shunt device (ZF) into or out of the circuit in parallel across the field winding (F1).

4. A circuit according to any preceding claim wherein the low speed limiter shunt device (ZF) further comprises a silicon controlled rectifier (TRIAC 1) which is connected in parallel across the field winding (F1), and a pair of opposed zener diodes (ZD1,ZD2) connected to a gate of the silicon controlled rectifier, said diodes being connected through a resistance to the field winding.

5. A circuit according to claim 4 wherein the low speed limiter shunt device (ZF) further comprises an impedance (Zo) connected in series with the silicon controlled rectifier (TRIAC 1) and the field winding (F1).

6. A circuit according to any of claims 1 to 3 wherein said low speed limiter shunt device (ZF) further comprises a first silicon controlled rectifier (TRIAC 1) which is connected in parallel across the field winding (F1) of said motor, a second silicon controlled rectifier (DIAC 1) connected to a gate of said first rectifier (TRIAC 1), and a pair of opposed zener diodes (ZD1,ZD2) connected to said second silicon controlled rectifier, said zener diodes in turn being connected through a resistance to said field winding (F1).

7. A circuit according to claim 6, wherein said low speed limiter shunt device (ZF) further comprises a capacitance connected between said first silicon controlled rectifier (TRIAC 1) and said second silicon controlled rectifier (DIAC 1).

8. A circuit according to claim 6, wherein said low speed limiter shunt device (ZF) further comprises an impedance (Zo) connected in series with said first silicon controlled rectifier to the field winding (F1) of said motor.

9. A circuit according to any of claims 1 to 3 wherein said low speed limiter shunt device (ZF) further comprises a pair of opposed zener diodes (ZD1,ZD2) coupled in parallel across the field winding (F1) of said motor.

10. A circuit according to claim 9, wherein said low speed limiter shunt device (ZF) further comprises an impedance (Zo) connected in series with said pair of zener diodes across the field winding (F1) of said motor.

11. A circuit according to claim 10, wherein said low speed limiter shunt device (ZF) further comprises a capacitance connected in series with said pair of zener diodes (ZD1,ZD2) across the field winding (F1) of said motor.

12. A circuit according to claim 10, wherein said low speed limiter shunt device (ZF) further comprises an inductance (Zo) connected in series with said pair of zener diodes (ZD1,ZD2) across the field winding (F1) of said motor.

13. A circuit according to any of claims 2 to 12 further comprising a switch (SA1) connected in series with said high speed limiter shunt device (ZA) for selectively removing/connecting said high speed limiter shunt device (ZA) from/across said motor armature winding (A1).

14. A circuit according to any of claims 1 to 13 wherein said high speed limiter shunt device (ZA) further comprises a silicon controlled rectifier (TRIAC 1) coupled in parallel across the field winding (F1) of said motor, and a pair of opposed zener diodes connected to a gate of said silicon controlled rectifier, said diodes in turn being connected through a resistance to said field winding (F1).

15. A circuit according to claim 14, wherein said high speed limiter shunt device (ZA) further comprises an impedance (Zo) connected in series with said silicon controlled rectifier (TRIAC 1) to the field winding of said motor.

16. A circuit according to any of claims 2 to 13 wherein said high speed limiter shunt device (ZA) further comprises a first silicon controlled rectifier (TRIAC 1) coupled in parallel across the field winding (F1) of said motor, a second silicon controlled rectifier (DIAC 1) connected to a gate of said first rectifier, and a pair of opposed zener diodes connected to said second silicon controlled rectifier (DIAC 2), said zener diodes (ZD1,ZD2) in turn being connected through a resistance to said field winding (F1).

17. A circuit according to claim 16, wherein said high speed limiter shunt device (ZA) further comprises a capacitance connected between said first silicon controlled rectifier (TRIAC 1) and said second silicon controlled rectifier (DIAC 1).

18. A circuit according to claim 16, wherein said high speed limiter shunt device further comprises an impedance (Zo) connected in series with said first silicon controlled rectifier (TRIAC 1) to the field winding (F1) of said motor.

19. A circuit according to any of claims 2 to 13 wherein said high speed limiter shunt device (ZA) further comprises a pair of zener diodes (ZD1,ZD2) coupled in parallel across the field winding (F1) of said motor.

20. A circuit according to claim 19, wherein said high speed limiter shunt device (ZA) further comprises an impedance (Zo) connected in series with said pair of zener diodes (ZD1,ZD2) across the field winding (F1) of said motor.

21. A circuit according to claim 19, wherein said high speed limiter shunt device (ZA) further comprises a capacitance connected in series with said pair of zener diodes (ZD1,ZD2) across the field winding (F1) of said motor.

22. A circuit according to claim 19, wherein said high speed limiter shunt device (ZA) further comprises an inductance connected in series with said pair of zener diodes (ZD1,ZD2) across the field winding (F1) of said motor.

23. An adjustable speed limiting circuit for a series excitation motor, comprising:
a plurality of series-connected zener diodes (ZM) coupled in parallel across a series-connected field winding and armature (A) of said motor, said diodes (ZM) having a first plurality of tap leads (TA1 - TAn) coupled between respective diodes;
a second plurality of tap leads (TF1 - TFn) connected at successive intervals along said field winding of said motor; and
a switch device (SWo) for selectively connecting one of the first plurality of tap leads with a corresponding one of the second plurality of tap leads, said switch device (SWo) being triggered to shunt current around said field winding to an armature winding (A) of said motor when a voltage across said field winding exceeds a predetermined first value and said switch device (SWo) being triggered to shunt current around said armature winding (A) of said motor when a voltage across said armature winding (A) exceeds a predetermined second value;
whereby when a load applied to said motor causes said field winding voltage to exceed said predetermined first value, said switch device (SWo) reduces field current to limit a minimum speed of said motor, and when a substantially no-load condition on said motor causes said armature winding voltage to exceed said predetermined second value, said switch device (SWo) maintains field magnetization to limit a maximum speed of said motor.

24. The adjustable speed limiting circuit according to claim 23, further comprising switch means (SWF) connected in series between said plurality of zener diodes (ZM) and said field and armature windings of said motor for selectively removing/connecting said diodes (ZM) from/in parallel across said motor windings.

## Patentansprüche

1. Drehzahlbegrenzender Schaltkreis für Ausführungen von Reihenschlußerregungs- und Doppelschlußerregungsmotoren, die eine Feldwicklung (F1) und eine Ankerwicklung (A1) aufweisen, der Schaltkreis besteht aus: Einem unteredrehzahlbegrenzenden Nebenwiderstand (ZF), der parallel zu der Feldwicklung (F1) des Motors geschaltet ist, der Nebenwiderstand (ZF) ist getriggert, um den Strom von der Feldwicklung (F1) zu der Ankerwicklung (A1) des Motors umzuleiten, wenn durch eine auf den besagten Motor angewandte Last die Spannung an der Feldwicklung (F1) einen vorbestimmten Wert übersteigt, wodurch die minimale Drehzahl des Motors durch die Verringerung des Stroms, der durch die Feldwicklung (F1) fließt, begrenzt wird.

2. Schaltkreis nach Anspruch 1, der weiterhin besteht aus: Einem oberedrehzahlbegrenzenden Nebenwiderstand (ZA), der parallel zum Anker (A1) des Motors geschaltet ist, der oberedrehzahlbegrenzende Nebenwiderstand (ZA) ist getriggert, um den Strom um die Ankerwicklung (A1) zu leiten, wenn durch eine im wesentlichen nulllastige Situation auf den besagten Motor die Spannung an der Ankerwicklung (A1) einen vorbestimmten zweiten Wert übersteigt, wodurch die maximale Drehzahl des Motors durch die Verringerung des Stroms, der durch die Ankerwicklung (A1) fließt, begrenzt wird.

3. Schaltkreis nach Anspruch 1 oder 2, der zusätzlich einen ersten in Reihe mit dem unteredrehzahlbegrenzenden Nebenwiderstand (ZF) geschalteten Schalter (SF1) zum wahlweisen Ein- und Ausschalten der parallelen Anordnung des unteredrehzahlbegrenzenden Nebenwiderstand (ZF) zu der Feldwicklung (F1) innerhalb des Schaltkreises aufweist.

4. Schaltkreis nach einem der vorhergehenden Ansprüche, dadurch gekennzeichnet, daß der unteredrehzahlbegrenzende Nebenwiderstand (ZF) weiterhin einen Siliziumgleichrichter (TRIAC 1), der parallel zu der Feldwicklung (F1) geschaltet ist, und ein Paar von entgegengesetzten Zener-Dioden (ZD1, ZD2) aufweist, die als Gate für den Siliziumgleichrichter geschaltet sind, die besagten Dioden sind über einen Widerstand mit der Feldwicklung verbunden.

5. Schaltkreis nach Anspruch 4, dadurch gekennzeichnet, daß der unteredrehzahlbegrenzende Nebenwiderstand (ZF) weiterhin eine in Reihe mit dem Siliziumgleichrichter (TRIAC 1) und der Feldwicklung (Fl) geschaltete Impedanz (Zo) aufweist.

6. Schaltkreis nach den Ansprüchen 1 bis 3, dadurch gekennzeichnet, daß der besagte unteredrehzahlbegrenzende Nebenwiderstand (ZF) weiterhin einen ersten Siliziumgleichrichter (TRIAC 1), der parallel zu den Feldwicklungen (F1) des besagten Motors geschaltet ist, einen zweiten als Gate für den besagten ersten Gleichrichter (TRIAC 1) geschalteten Siliziumgleichrichter (DIAC 1), und ein Paar entgegengesetzter, mit dem besagten zweiten Siliziumgleichrichter verbundener Zener-Dioden (ZD1, ZD2) aufweist, wobei die besagten Zener-Dioden wiederum über einen Widerstand mit der besagten Feldwicklung verbunden sind.

7. Schaltkreis nach Anspruch 6, dadurch gekennzeichnet, daß der besagte unteredrehzahlbegrenzende Nebenwiderstand (ZF) weiterhin eine zwischen den besagten ersten Siliziumgleichrichter (TRIAC 1) und den besagten zweiten Siliziumgleichrichter (DIAC 1) geschaltete Kapazität aufweist.

8. Schaltkreis nach Anspruch 6, dadurch gekennzeichnet, daß der besagte unteredrehzahlbegrenzende Nebenwiderstand (ZF) weiterhin eine in Reihe mit dem besagten ersten Siliziumgleichrichter zu der Feldwicklung (F1) geschaltete Impedanz (Zo) aufweist.

9. Schaltkreis nach den Ansprüchen 1 bis 3, dadurch gekennzeichnet, daß der besagte unteredrehzahlbegrenzende Nebenwiderstand (ZF) weiterhin ein Paar entgegengesetzter, parallel zu der Feldwicklung (F1) des besagten Motors geschaltete Zener-Dioden (ZD1, ZD2) aufweist.

10. Schaltkreis nach Anspruch 9, dadurch gekennzeichnet, daß der besagte unteredrehzahlbegrenzende Nebenwiderstand (ZF) weiterhin eine in Reihe mit dem besagten Paar von Zener-Dioden zu der Feldwicklung (F1) des besagten Motors geschaltete Impedanz (Zo) aufweist.

11. Schaltkreis nach Anspruch 10, dadurch gekennzeichnet, daß der besagte unteredrehzahlbegrenzende Nebenwiderstand (ZF) weiterhin eine in Reihe mit dem besagten Paar von Zener-Dioden (ZD1, ZD2) zu der Feldwicklung (F1) des besagten Motors geschaltete Kapazität aufweist.

12. Schaltkreis nach Anspruch 10, dadurch gekennzeichnet, daß der besagte unteredrehzahlbegrenzende Nebenwiderstand (ZF) weiterhin eine in Reihe mit dem besagten Paar von Zener-Dioden (ZD1, ZD2) zu der Feldwicklung (F1) des besagten Motors geschaltete Induktivität (Zo) aufweist.

13. Schaltkreis nach den Ansprüchen 2 bis 12, der weiterhin einen in Reihe mit dem besagten unteredrehzahlbegrenzende Nebenwiderstand (ZF) geschalteten Schalter (SA1) aufweist, der wahlweise den besagten unteredrehzahlbegrenzenden Nebenwiderstand (ZF) von/zu der besagten Motorankerwicklung (A1) ab-/zuschaltet.

14. Schaltkreis nach den Ansprüchen 1 bis 13, dadurch gekennzeichnet, daß der besagte oberedrehzahlbegrenzende Nebenwiderstand (ZA) weiterhin einen ersten Siliziumgleichrichter (TRIAC 1), der parallel zu den Feldwicklungen (F1) des besagten Motors geschaltet ist, und der aus einem Paar entgegengesetzter, als Gate für den besagten Siliziumgleichrichter geschaltete Zener-Dioden aufweist, wobei die besagten Zener-Dioden wiederum über einen Widerstand mit der besagten Feldwicklung verbunden sind.

15. Schaltkreis nach Anspruch 14, dadurch gekennzeichnet, daß der besagte oberedrehzahlbegrenzende Nebenwiderstand (ZA) weiterhin eine in Reihe mit dem besagten Siliziumgleichrichter (TRIAC 1) zu der Feldwicklung (Fl) des besagten Motors geschalteten Impedanz (Zo) aufweist.

16. Schaltkreis nach den Ansprüchen 2 bis 13, dadurch gekennzeichnet, daß der besagte oberedrehzahlbegrenzende Nebenwiderstand (ZA) weiterhin einen ersten parallel zu der Feldwicklung (F1) des besagten Motors verbundenen Siliziumgleichrichter (TRIAC 1), einen zweiten als Gate für den ersten Gleichrichter geschalteten Siliziumgleichrichter (DIAC 1), und ein Paar von entgegengesetzten, mit dem besagten zweiten Siliziumgleichrichter (DIAC 2) verbundene Zener-Dioden aufweist, wobei die besagten Zener-Dioden (ZD1, ZD2) wiederum durch einen Widerstand mit der besagten Feldwicklung verbunden (F1) sind.

17. Schaltkreis nach Anspruch 16, dadurch gekennzeichnet, daß der besagte oberedrehzahlbegrenzende Nebenwiderstand (ZA) weiterhin eine zwischen den besagten ersten Siliziumgleichrichter (TRIAC 1) und den besagten zweiten Siliziumgleichrichter (DIAC 1) geschaltete Kapazität aufweist.

18. Schaltkreis nach Anspruch 16, dadurch gekennzeichnet, daß der besagte oberedrehzahlbegrenzende Nebenwiderstand weiterhin eine in Reihe mit dem besagten ersten Siliziumgleichrichter (TRIAC 1) zu der Feldwicklung (Fl) des besagten Motors geschaltete Impedanz aufweist.

19. Schaltkreis nach den Ansprüche 2 bis 13, dadurch gekennzeichnet, daß der besagte oberedrehzahlbegrenzende Nebenwiderstand (ZA) weiterhin ein Paar von parallel zu den Feldwicklungen (F1) des besagten Motors geschaltete Zener-Dioden (ZD1, ZD2) aufweist.

20. Schaltkreis nach Anspruch 19, dadurch gekennzeichnet, daß der besagte oberedrehzahlbegrenzende Nebenwiderstand (ZA) weiterhin eine in Reihe mit dem Paar aus Zener-Dioden (ZD1, ZD2) zu der Feldwicklung (F1) des besagten Motors geschaltete Impedanz (Zo) aufweist.

21. Schaltkreis nach Anspruch 19, dadurch gekennzeichnet, daß der besagte oberedrehzahlbegrenzende Nebenwiderstand (ZA) weiterhin eine in Reihe mit dem Paar aus Zener-Dioden (ZD1, ZD2) zu der Feldwicklung (Fl) des besagten Motors geschaltete Kapazität aufweist.

22. Schaltkreis nach Anspruch 19, dadurch gekennzeichnet, daß der besagte oberedrehzahlbegrenzende Nebenwiderstand (ZA) weiterhin eine in Reihe mit dem Paar aus Zener-Dioden (ZD1, ZD2) zu der Feldwicklung (F1) des besagten Motors geschaltete Induktivität aufweist.

23. Einstellbarer drehzahlbegrenzender Schaltkreis für einen Reihenschlußerregungsmotor bestehend aus: einer Vielzahl von in Reihe geschalteten Zener-Dioden, die parallel zu einer in Reihe geschalteten Feldwicklung und einem Anker (A) des besagten Motors geschaltet sind, die besagten Dioden (ZM) weisen eine erste Vielzahl von zwischen ihnen angeschlossener Anschlußleitungen (TA1-TAn) auf;
einer zweiten Vielzahl von in sukzessiven Intervallen entlang der Feldwicklung des besagten Motors angeschlossener Anschlußleitung (TF1-TFn); und einem Schaltgerät (SWo) für die wahlweise Verbindung einer Anschlußleitung aus der ersten Vielzahl mit einer entsprechenden aus der zweiten Vielzahl von Anschlußleitungen, wobei das besagte Schaltgerät getriggert ist, um den Strom um die besagte Feldwicklung zu der Ankerwicklung (A) des besagten Motors zu leiten, wenn die Spannung an der besagten Feldwicklung einen vorbestimmten ersten Wert übersteigt, und wobei das besagte Schaltgerät (SWo) getriggert ist, um den Strom um die besagte Ankerwicklung (A) des besagten Motors zu lenken, wenn die Spannung an der besagten Ankerwicklung (A) einen vorbestimmten zweiten Wert übersteigt; wodurch das besagte Schaltgerät (SWo) den Feldstrom reduziert um eine Minimumdrehzahl zu begrenzen, wenn durch eine auf den Motor angewandte Last die Feldwicklungsspannung den vorbestimmten ersten Wert übersteigt, und wenn ein im wesentlichen null-lastiger Zustand auf besagten Motor die Ankerwicklungsspannung den besagten zweiten Wert übersteigen läßt, wobei das Schaltgerät (SWo) die Feldmagnetisierung, die die Maximaldrehzahl des besagten Motors begrenzt, aufrecht hält.

24. Einstellbarer drehzahlbegrenzender Schaltkreis nach Anspruch 23, besteht weiterhin aus einem in Reihe zwischen die besagte Vielzahl von Zener-Dioden (ZM) und den besagten Feld- und Ankerwicklungen des besagten Motors geschalteten Schaltergeräten (SWF), um wahlweise die besagten Dioden (ZM) parallel zu/von den besagten Motorwicklungen zu-/abzuschalten.

## Revendications

1. Circuit de limitation de vitesse pour moteurs à excitation en série et à excitation compound du type comprenant un enroulement d'excitation (Fl) et un enroulement d'induit (A1), le circuit comprenant :
un dispositif de dérivation du limiteur de faible vitesse (ZF) qui est connecté en parallèle sur l'enroulement d'excitation (F1) du moteur, le dispositif de dérivation (ZF) étant déclenché pour détourner le courant autour de l'enroulement d'excitation (F1) vers l'enroulement d'induit (A1) du moteur quand une charge appliquée audit moteur amène la tension sur l'enroulement d'excitation (F1) à dépasser une première valeur prédéterminée, la vitesse minimale du moteur étant limitée par la réduction de courant traversant l'enroulement d'excitation (F1).

2. Circuit selon la revendication 1, comprenant en outre :
un dispositif de dérivation du limiteur de grande vitesse (ZA) qui est connecté en parallèle sur l'induit (A1) du moteur, le dispositif de dérivation du limiteur de grande vitesse (ZA) étant déclenché pour détourner le courant autour de l'enroulement d'induit (A1) quand une condition d'absence quasi complète de charge sur ledit moteur amène la tensicn sur l'enroulement d'induit (A1) à dépasser une deuxième valeur prédéterminée, la vitesse maximale du moteur étant limitée par la réduction de courant traversant l'enroulement d'induit (A1).

3. Circuit selon la revendication 1 ou 2, comprenant en outre un premier commutateur (SF1) connecté en série avec le dispositif de dérivation du limiteur de faible vitesse (ZF) pour placer sélectivement le dispositif de dérivation du limiteur de faible vitesse (ZF) en connexion ou en déconnexion avec le circuit en parallèle sur l'enroulement d'excitation (F1).

4. Circuit selon l'une quelconque des revendications précédentes, dans lequel le dispositif de dérivation du limiteur de faible vitesse (ZF) comprend en outre un redresseur au silicium commandé (TRIAC 1), qui est connecté en parallèle sur l'enroulement d'excitation (F1), et une paire de diodes Zener opposées (ZD1, ZD2) connectées à une grille du redresseur au silicium commandé, lesdites diodes étant connectées par l'intermédiaire d'une résistance à l'enroulement d'excitation.

5. Circuit selon la revendication 4, dans lequel le dispositif de dérivation du limiteur de faible vitesse (ZF) comprend en outre une impédance (Zo) connectée en série avec le redresseur au silicium commandé (TRIAC 1) et l'enroulement d'excitation (F1).

6. Circuit selon l'une quelconque des revendications 1 à 3, dans lequel ledit dispositif de dérivation du limiteur de faible vitesse (ZF) comprend en outre un premier redresseur au silicium commandé (TRIAC 1) qui est connecté en parallèle sur l'enroulement d'excitation (F1) dudit moteur, un deuxième redresseur au silicium commandé (DIAC 1) connecté à une gâchette dudit premier redresseur (TRIAC 1), et une paire de diodes Zener opposées (ZD1, ZD2) connectées audit deuxième redresseur au silicium commandé, lesdites diodes Zener étant à leur tour connectées par l'intermédiaire d'une résistance audit enroulement d'excitation (F1).

7. Circuit selon la revendication 6, dans lequel ledit dispositif de dérivation du limiteur de faible vitesse (ZF) comprend en outre un condensateur connecté entre ledit premier redresseur au silicium commandé (TRIAC 1) et ledit deuxième redresseur au silicium commandé (DIAC 1).

8. Circuit selon la revendication 6, dans lequel ledit dispositif de dérivation du limiteur de faible vitesse (ZF) comprend en outre une impédance (Zo) connectée en série avec ledit premier redresseur au silicium commandé à l'enroulement d'excitation (F1) dudit moteur.

9. Circuit selon l'une quelconque des revendications 1 à 3, dans lequel ledit dispositif de dérivation du limiteur de faible vitesse (ZF) comprend en outre une paire de diodes Zener opposées (ZD1, ZD2) couplées en parallèle sur l'enroulement d'excitation (F1) dudit moteur.

10. Circuit selon la revendication 9, dans lequel ledit dispositif de dérivation du limiteur de faible vitesse (ZF) comprend en outre une impédance (Zo) connectée en série avec ladite paire de diodes Zener sur l'enroulement d'excitation (F1) dudit moteur.

11. Circuit selon la revendication 10, dans lequel ledit dispositif de dérivation du limiteur de faible vitesse (ZF) comprend en outre un condensateur connecté en série avec ladite paire de diodes Zener (ZD1, ZD2) sur l'enroulement d'excitation (F1) dudit moteur.

12. Circuit selon la revendication 10, dans lequel ledit dispositif de dérivation du limiteur de faible vitesse (ZF) comprend en outre une inductance (Zo) connectée en série avec ladite paire de diodes Zener (ZD1, ZD2) sur l'enroulement d'excitation (F1) dudit moteur.

13. Circuit selon l'une quelconque des revendications 2 à 12, comprenant en outre un commutateur (SA1) connecté en série avec ledit dispositif de dérivation du limiteur de grande vitesse (ZA) pour mettre sélectivement ledit dispositif de dérivation du limiteur de grande vitesse (ZA) en connexion ou déconnexion avec ledit enroulement d'induit (A1) du moteur.

14. Circuit selon l'une quelconque des revendications 1 à 13, dans lequel ledit dispositif de dérivation du limiteur de grande vitesse (ZA) comprend en outre un redresseur au silicium commandé (TRIAC 1) couplé en parallèle sur l'enroulement d'excitation (F1) dudit moteur, et une paire de diodes Zener opposées connectées à une gâchette dudit redresseur au siliciun commandé, lesdites diodes étant à leur tour connectées par l'intermédiaire d'une résistance audit enroulement d'excitation (F1).

15. Circuit selon la revendication 14, dans lequel ledit dispositif de dérivat.ion du limiteur de grande vitesse (ZA) comprend en outre une impédance (Zo) connectée en série avec ledit redresseur au silicium commandé (TRIAC 1) à l'enroulement d'excitation dudit moteur.

16. Circuit selon l'une quelconque des revendications 2 à 13, dans lequel ledit dispositif de dérivation du limiteur de grande vitesse (ZA) comprend en outre un premier redresseur au silicium commandé (TRIAC 1) couplé en parallèle sur l'enroulement d'excitation (F1) dudit moteur, un deuxième redresseur au silicium commandé (DIAC 1) connecté à une gâchette dudit premier redresseur, et une paire de diodes Zener opposées connectées audit deuxième redresseur au silicium commandé (DIAC 2), lesdites diodes Zener (ZD1, ZD2) étant à leur tour connectées par l'intermédiaire d'une résistance audit enroulement d'excitation (F1).

17. Circuit selon la revendication 16, dans lequel ledit dispositif de dérivation du limiteur de grande vitesse (ZA) comprend en outre un condensateur connecté entre ledit premier redresseur au silicium commandé (TRIAC 1) et ledit deuxième redresseur au silicium commandé (DIAC 1).

18. Circuit selon la revendication 16, dans lequel ledit dispositif de dérivation du limiteur de grande vitesse (ZA) comprend en outre une impédance (Zo) connectée en série avec ledit premier redresseur au silicium commandé (TRIAC 1) à l'enroulement d'excitation (F1) dudit moteur.

19. Circuit selon l'une quelconque des revendications 2 à 13, dans lequel ledit dispositif de dérivation du limiteur de grande vitesse (ZA) comprend en outre une paire de diodes Zener (ZD1, ZD2) couplées en parallèles sur l'enroulement d'excitation (F1) dudit moteur.

20. Circuit selon la revendication 19, dans lequel ledit dispositif de dérivation du limiteur de grande vitesse (ZA) comprend en outre une impédance (Zo) connectée en série avec ladite paire de diodes Zener (ZD1, ZD2) sur l'enroulement d'excitation (F1) dudit moteur.

21. Circuit selon la revendication 19, dans lequel ledit dispositif de dérivation du limiteur de grande vitesse (ZA) comprend en outre un condensateur connecté en série avec ladite paire de diodes Zener (ZD1, ZD2) sur l'enroulement d'excitation (F1) dudit moteur.

22. Circuit selon la revendication 19, dans lequel ledit dispositif de dérivation du limiteur de grande vitesse (ZA) comprend en outre une inductance connectée en série avec ladite paire de diodes Zener (ZD1, ZD2) sur l'enroulement d'excitation (F1) dudit moteur.

23. Circuit de limitation de vitesse réglable pour un moteur à excitation en série, comprenant :
une pluralité de diodes Zener connectées en série (ZM) couplées en parallèle sur un enroulement d'excitation et un enroulement d'induit (A) connectés en série dudit moteur, lesdites diodes (ZM) ayant une première pluralité de fils de prise (TA1 - TAn) couplés entre les diodes respectives ;
une deuxième pluralité de fils de prise (TF1 - TFn) connectés à intervalles successifs le long dudit enroulement d'excitation dudit moteur ; et
un dispositif commutateur (SWo) pour connecter sélectivement un fil de prise de la première pluralité de fils de prise avec un fil de prise correspondant de la deuxième pluralité de fils de prise, ledit dispositif commutateur (SWo) étant déclenché pour dériver le courant autour dudit enroulement d'excitation vers un enroulement d'induit (A) dudit moteur quand une tension sur ledit enroulement d'excitation dépasse une première valeur prédéterminée et ledit dispositif commutateur (SWo) étant déclenché pour dériver le courant autour dudit enroulement d'induit (A) dudit moteur quand une tension sur ledit enroulement d'induit (A) dépasse une deuxième valeur prédéterminée ;
suite à quoi, lorsqu'une charge appliquée audit moteur amène ladite tension sur l'enroulement d'excitation à dépasser ladite première valeur prédéterminée, ledit dispositif commutateur (SWo) réduit le courant d'excitation pour limiter une vitesse minimale dudit moteur, et lorsqu'une condition d'absence quasi complète de charge sur ledit moteur amène ladite tension sur l'enroulement d'induit à dépasser ladite deuxième valeur prédéterminée, ledit dispositif commutateur (SWo) maintient la magnétisation d'excitation pour limiter une vitesse maximale dudit moteur.

24. Circuit de limitation de vitesse réglable selon la revendication 23, comprenant en outre des moyens de commutation (SWF) connectés en série entre ladite pluralité de diodes Zener (ZM) et lesdits enroulements d'excitation et d'induit dudit moteur pour connecter en parallèle ou déconnecter sélectivement lesdites diodes (ZM) sur lesdits enroulements du moteur.
